# EUROPEAN PATENT APPLICATION

(11) **EP 2 036 640 A1**
(43) Date of publication of application: **18.03.2009**
(21) Application number: 07116381.0
(22) Date of filing: 13.09.2007
(51) Int. Cl.: B23B 51/08, B23C 5/10, B23C 5/12, B23D 71/00

(54) **Rotary tool**

(71) Applicant: Jaber Suliman Alhusain, Maryam, Block No. 3, Street No. 46 House no. 17, Abrak Khaitan (KW)
(72) Inventor: Jaber Suliman Alhusain, Maryam, Block No. 3, Street No. 46 House no. 17, Abrak Khaitan (KW)
(74) Representative: Eisenführ, Speiser & Partner

(57) **Abstract**

A one-piece and a two-piece rotary tool includes a steel shank adapted to fit into a chuck of an electric drill, a drill bit and a frusto conical or frusto spherical file portion between the shank and the drill bit and all of which are disposed on a common longitudinal axis. The drill bit can be removably attachable to the file portion or the tool can have a one-piece unitary construction. The frusto conical or frusto spherical file portion includes a plurality of crowned teeth about its periphery and wherein each of the teeth have a front cutting side and a back side which includes a plurality of sharp serrations thereon. The composition of the steel tool includes carbon, silicon, molybdenum and chrome. A rotary tool set including a plurality of drill bits and file portions having a plurality of shapes is also disclosed.

## Description

### FIELD OF THE INVENTION

This invention relates to a rotary tool for performing a plurality of operations on a workpiece and more particularly to a rotary tool of the type having a unitary shank adapted to fit into the chuck of an electric drill, a drill bit and a frusto conical file between the shank and drill bit all of which are disposed along a common longitudinal axis.

### BACKGROUND FOR THE INVENTION

Rotary tools for performing a plurality of operations on a workpiece have been known for many years. For example, a U.S. Patent No. 3,346,894 of Lemelson entitled "Apparatus For Controlling Rotary and Longitudinal Movements Of A Combination Tool Carrying Spindle" discloses a combination tool including a drill and a further portion for performing a secondary operation on a workpiece during or immediately following the cutting of a hole in the workpiece with the drill. As disclosed, the rotary tool includes a twist drill connected to a tapered head. The tapered head is connected to a shank and includes a plurality of replaceable blades.

A more recent U.S. Patent No. 5,282,705 of Shiga et al. is entitled "Burnishing Drill." The Shiga et al. patent discloses a cylindrical shank and a drill body connected to the shank. Drilling edges, reaming faces and reaming edges are formed on a first reduced diameter portion, a second reduced diameter portion and a third reduced diameter portion located at a foremost end of the drill body respectively. The reaming faces which are located axially at rearward positions of the drilling edges and the reaming edges extend radially outward from the foremost end of the drill and incline axially in the rearward direction with respect to the rotational direction. Since an inner surface of the hole is drilled and reamed by the drilling edges and the reaming edges can be further smoothened by the reaming faces, the surface roughness of the finished hole can be improved.

A commonly encountered disadvantage of the drilling tools and reaming edges known in the art is that they are prone to wear and breakage. In both cases the functionality of the tools is decreased as they become blunt or the surfaces generated do not exhibit the required properties and quality. Further, the prior art drilling tools are not adjustable to the composition and properties of the workpiece.

The rotary tools in accordance with the present invention offer improved cutting by a frusto conical file which is durable and which provides an improved cutting edge over an extended period of time. Further, the rotary tools in accordance with the present invention can be manufactured with different degrees of coarseness for different purposes and at a competitive price.

In addition, the rotary tools in accordance with the present invention are made of a hard steel and have a high resistance to breakage and are capable of maintaining a sharp cutting edge and are resistant to fracture. Further, the composition of a rotary tool in accordance with the present invention can be adjusted to optimise the performance of the tool with respect to the composition of the workpiece.

### BRIEF SUMMARY OF THE INVENTION

In essence, the present invention contemplates a one-piece and a two-piece rotary tool for performing a plurality of operations on a workpiece.

The one-piece rotary tool comprises a unitary hardened steel shank adapted to fit into a chuck of an electric drill, a drill bit and a frusto conical file between the shank and the drill bit along a common longitudinal axis. The frusto conical file includes an outer periphery that defines an angle of between about 15° and 55°, preferably between 25° and 45°, 35° on average with respect to the longitudinal axis of the tool. The composition of the employed steel includes from about 0.45% by weight to about 0.65% by weight carbon, about 2.25% by weight silicon, from 0.4% by weight to about 1.4% by weight molybdenum, from 1.5 to about 3.25% by weight chrome and less than 0.45% by weight sulphur and phosphorous. Higher amounts of sulphur and phosphorous would otherwise contribute to the breakage of the tool.

In a preferred embodiment of the present invention the composition of the steel includes about 0.65 % by weight carbon, about 2.25% by weight silicon, about 1.4% by weight molybdenum and about 3.25% by weight chrome.

In another advantageous embodiment the composition of the steel includes about 0.45% by weight carbon, about 2.25% by weight silicon, about 0.4% by weight molybdenum and about 1.5% by weight chrome.

In yet another advantageous embodiment the composition of the steel includes about 0.55% by weight carbon, about 2.25% by weight silicon, about 0.9 % by weight molybdenum and about 2.4% by weight chrome. Molybdenum increases the hardness and chrome the friction resistance of the tool. Carbon increases the strength of the tool.

With the different compositions of steel the tool can be adjusted to the properties of the workpiece to be treated. E.g. the strength, hardness and friction resistance of the tool, in particular the file portion can selectively be adjusted to the properties of the workpiece so that an optimal treatment is achieved.

The rotary tool is favourably developed in that the frusto conical file includes a plurality of crowned teeth about its periphery and wherein each of the plurality of teeth have a front cutting side and a back side and in which each tooth includes a plurality of sharp serrations extending longitudinal of each tooth and formed the backside of each tooth adjacent the cutting edge thereof. This arrangement of the teeth advantageous to achieve a good filing or reaming result in the workpiece to be treated, i.e. in the case a chamfering is to be generated by the rotary tool or sharp edges have to be burred. The rotary tool enables the combination of the operations drilling and filing/reaming. As there is no need to change the drilling tool for a filing tool as is necessary in the art, the operation time can significantly be reduced.

Preferably, the outer periphery of the frusto conical file forms an angle with a longitudinal axis of the tool of about 55°. In another preferred embodiment, the outer periphery of the frusto conical file forms an angle with the longitudinal axis of the tool of about 15°. The rotary tool can be used for generating cavities of different shapes so that it can be applied to a plurality of cases.

Another advantageous embodiment is characterised by a hardened steel shank adapted to fit into a chuck of an electric drill, and axially aligned drill bit and a file portion having a forward portion adjacent to the drill bit and rear portion adjacent the shank and wherein the diameter of the file portion increases between the front and rear portions and wherein the composition of the steel includes from 0.45% by weight to about 0.65% by weight carbon, about 2.25% by weight silicon, from 0.4% by weight to about 1.4% by weight molybdenum, from 1.5 to about 3.25% by weight chrome and less than 0.45% by weight sulphur and phosphorous. In this embodiment, the smallest diameter of the file portion is not equal to the diameter of the drill bit. The generated chamfering is particularly suited when washers and corresponding screws are to be inserted into a cavity of a workpiece. The conical shape of the forward portion facilitates the insertion of the washer and/or a screw driver or a screw wrench. The cylindrical portion assures that the biggest diameter of the chamfering does not get too big which could be disturbing if many screws have to be placed close to each other. Further, the integrity of the workpiece is maintained. It is also conceivable only to use a cylindrical portion without a conical portion.

Preferably, the file portion has a shape of a hemisphere or a frusto conical shape forming an angle of between 15° and 55°. Depending on the application, the file portion of the most suitable shape can be employed so that the particularities of the respective application can be considered.

Advantageously, the drill bit is removably attachable to the file portion. This embodiment increases the flexibility of the rotary tool since the drill bit can quickly be replaced e.g. by a screw bit for inserting the screw in the hole. It is not necessary to insert another tool into the drilling machine so that the time required for changing the bits is reduced.

In a preferred embodiment, the tool has a unitary construction. The unitary construction of the tool has the advantage that the tool is very durable and can bear high stress so that such a tool is particularly suited when treating a very hard workpiece to which high forces have to be applied upon drilling and filing.

In a favourable embodiment the steel includes up to about 1% by weight of nickel, tungsten and cobalt and wherein the steel has been annealed at between about 720°C and 735°C. A steel of such a composition is particularly suited for the applications commonly encountered with the rotary tool according to the invention. Such metals may improve the ability of the tools to withstand higher temperatures and provide improved cutting.

Another aspect of the present invention relates to a two-piece rotary tool for performing a plurality of operations on a workpiece, said rotary tool comprising a hardened steel shank adapted to fit into the chuck of an electric drill, a drill bit and a file portion between said shank and said drill bit along a common longitudinal axis and wherein the composition of said steel tool includes 0.55% by weight carbon, 2.25% silicon, 0.9% by weight molybdenum, 2.4% by weight chrome and less than 0.45% by weight sulphur and phosphorous. The term "two-piece" indicates that the rotary tool is composed of two separable pieces. This could mean that the drill bit is removable from the file portion. However, the term "two-piece" is to be understood in a broader sense as it also indicates that other components may be separable into two parts or one component may consist of two individual parts. It is conceivable that the shank is separable from the file portion or the file portion as such can be composed of two pieces, e.g. one portion of a frusto conical shape and another with a cylindrical shape which can be combined or exchanged according to the encountered requirements.

A preferred embodiment of the two-piece rotary tool is characterised in that the file portion includes a frusto conical portion and defines an angle of between about 45° and 65° with respect to the longitudinal axes of said tool. The advantages of the one-piece rotary tool equally apply.

The two-piece rotary tool according to the present invention is further developed in that the frusto conical portion includes a plurality of teeth about its periphery and where each of said plurality of teeth have a front cutting side and a back side and in which each tooth includes a plurality of sharp serrations extending longitudinally of each tooth and formed on the back side of each tooth adjacent to the cutting edge thereof. The advantages of the one-piece rotary tool equally apply.

Advantageously, the file portion includes a cylindrical portion adjacent to said frusto conical portion or has a frusto spherical shape. The shape of the file portion can be adjusted according to the requirements encountered in a given situation.

In a favourable embodiment of the two-piece rotary tool, the drill bit is removably attachable to the file portion. This embodiment increases the flexibility of the rotary tool since the drill bit can quickly be replaced e.g. by a screw bit for inserting the screw in the hole. It is not necessary to insert another tool into the drilling machine so that the time required for changing the bits is reduced.

In a favourable embodiment the two-piece rotary tool is made of steel the composition of which includes up to about 1% by weight of nickel, tungsten and cobalt and wherein the steel has been annealed at between about 720°C and 735°C. A steel of such a composition is particularly suited for the applications commonly encountered with the rotary tool according to the invention. Such metals may improve the ability of the tools to withstand higher temperatures and provide improved cutting.

Another aspect of the present invention is a rotary tool set for performing a plurality of operations on a work piece, the drill set including a plurality of rotary tools each of which includes a hardened steel shank adapted to fit into the chuck of an electric drill, a drill bit and a file portion between the shank and the drill bit along a common longitudinal axis and wherein the drill set includes file portions having a plurality of different shapes. The drill set which may be pooled in a tool box or a other containers offers a high flexibility since a wide variety of file portions are rapidly available so that the technician using the drill set can use the appropriate file portion depending on the encountered situation. The workpiece can thus be treated according to its material and properties and any kind of chamfering can quickly be realised. Further, the different file portions can be used for other filing and reaming operations, e.g. to burr sharp edges etc.

The invention will now be described in connection with the accompanying drawings wherein like references numbers will be used to define like parts.

### DESCRIPTION OF THE DRAWINGS

Figure 1 is a side elevational view of a rotary tool in accordance with one embodiment of the invention;
Figure 2 is a side elevational view of an electric drill having a rotary tool in accordance with the present invention clamped therein;
Figure 3 is a side elevational view of a rotary tool in accordance with another embodiment of the present invention wherein a drill bit portion has a relatively short length;
Figure 4 is a cross sectional view of a rotary tool in accordance with a further embodiment of the invention as shown within a workpiece;
Figure 5 is an enlarged cross sectional view of the file teeth in a preferred embodiment of the invention;
Figure 6 is a side elevational view of a rotary tool in accordance with another embodiment of the invention;
Figure 7 is side elevational view of a rotary tool in accordance with a further embodiment of the invention;
Figure 8 is a side elevational view of a rotary tool in accordance with a further embodiment of the invention wherein the drill has a two-piece construction;
Figure 9 is a side elevational view of a rotary tool according to another embodiment of the invention wherein the drill has a two-piece construction;;
Figure 10 is a side elevational view of a rotary tool in accordance with a further embodiment of the invention wherein the drill has a two-piece construction;
Figure 11 illustrates different operation modes of the rotary tool according to the present invention; and
Figure 12 illustrates different arrangements of the teeth leading to different coarsenesses of the file portions.

### DESCRIPTION OF THE PREFERRED

### EMBODIMENTS OF THE INVENTION

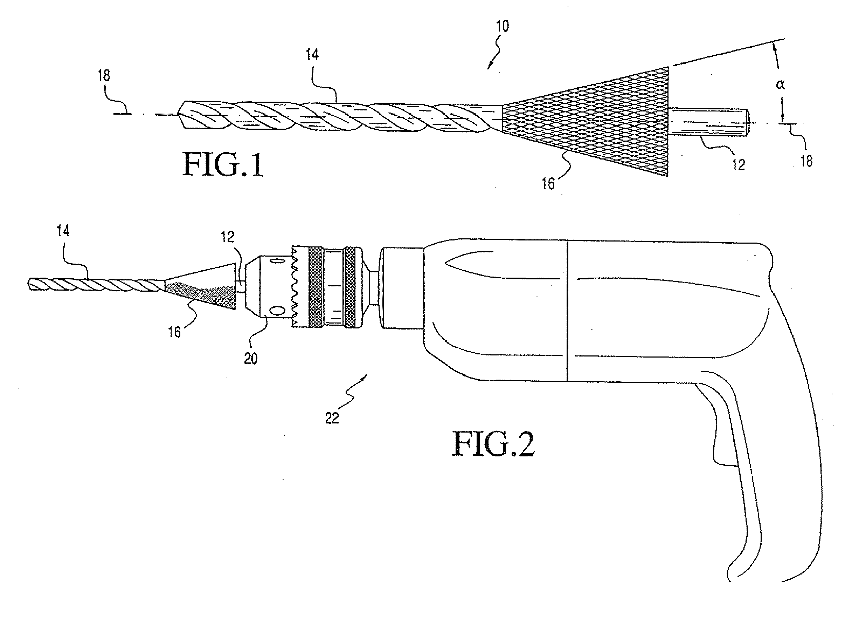

A one-piece rotary tool 10 for performing a plurality of operations on a workpiece is illustrated in Figures 1-5. As shown therein, the tool 10 of hardened tool steel includes a shank 12 which extends from or forms a rearward portion of the tool 10 and is adapted to fit into a chuck 20 (Fig. 2) of an electric drill 22 shown in Figure 2. As illustrated, the tool 10 includes a forward portion in the form of a drill bit 14 and a frusto conical file 16.

As shown in Figures 1 and 2, the frusto conical file 16 defines an angle of about 15° with respect to the common longitudinal axis 18 of the tool 10. In the preferred embodiment of the invention, the composition of the steel includes about 0.55% by weight carbon, about 2.25% by weight silicon, about 0.9% by weight molybdenum and about 2.4% by weight chrome. Other materials such as nickel, tungsten and cobalt may also be included. However, it is desirable to limit sulphur and phosphorous to no more than 0.45% in order to avoid weakening of the tool.

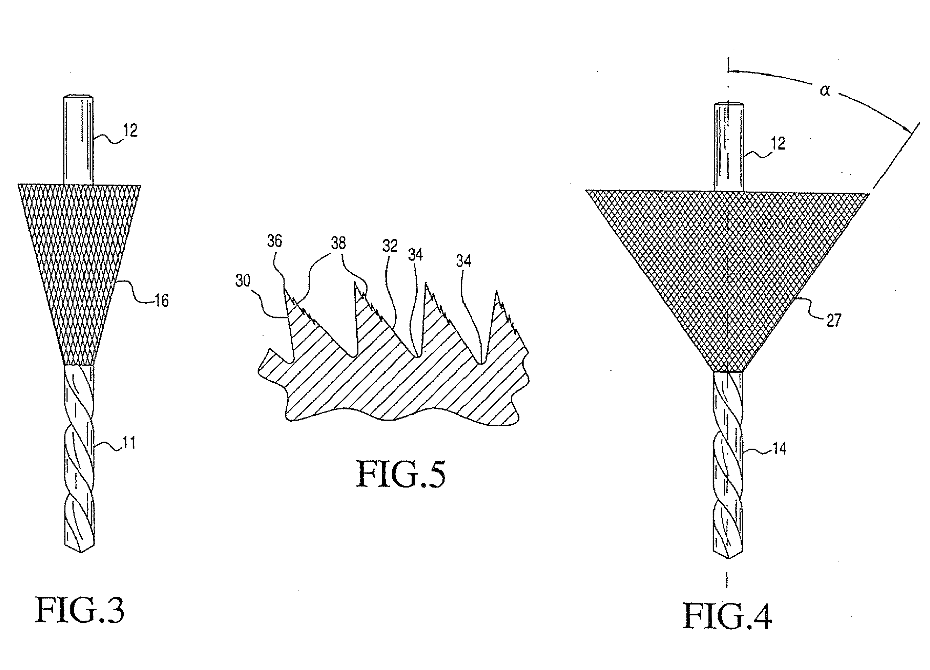

A second embodiment of the invention is illustrated in Figure 3 wherein a drill bit 11 is considerably shorter than the bit 10 in Figures 1 and 2. In this embodiment of the invention, the composition of the steel includes between about 0.45 % to about 0.65%, about 2.25% silicon, about 0.4% to about 1.4% molybdenum and from 1.5 to about 3.5% chrome. All of the percentages are expressed as percent by weight.

Figure 4 illustrates a further embodiment of the invention wherein the frusto conical file 27 defines an angle of about 55°.

An important feature in the present invention resides in the use of a frusto conical file as opposed to a frusto conical element which includes abrasive media or removable blades attached thereon. A preferred form of a file as used in the present invention is illustrated in Figure 5. As shown therein, a plurality of crowned teeth having a relatively steep front cutting side 30 and an inclined back side 32. The gulleys 34 at the conjunction of the base of adjacent teeth may be either sharply angled or rounded as shown. The cutting edge 36 of each tooth generally comprises a sharp point at the conjunction of the front side 30 and the backside 12. Further, a plurality of sharp serrations 38 extend longitudinally of the teeth and generally transversely of the file, which serrations are found in the upper portion of the back sides of the teeth, generally parallel to the cutting edge 16, as illustrated in Figure 5.

In the preferred embodiment of the invention the rotary tool comprises a unitary or one-piece hardened steel shank which is adapted to fit into the chuck of an electric drill. The tool also includes a drill bit and a frusto conical file disposed between the shank and drill bit along a common longitudinal axis. In this embodiment of the invention, the frusto conical file includes an outer periphery that defines an angle of 35° or about 35° with respect to the common longitudinal axis of the tool. In this embodiment the composition of the steel tool includes about 0.55% by weight carbon, about 2.25% by weight silicon, 0.9% by weight molybdenum, 2.4% by weight chrome and less than 0.45% by weight sulphur and phosphorous and wherein the frusto conical file includes a plurality of crowned teeth about its periphery. In addition, each of the plurality of teeth have a front cutting side and a backside and each tooth includes a plurality of sharp serrations extending longitudinally of each tooth and formed on the backside of each tooth adjacent to cutting edge thereof.

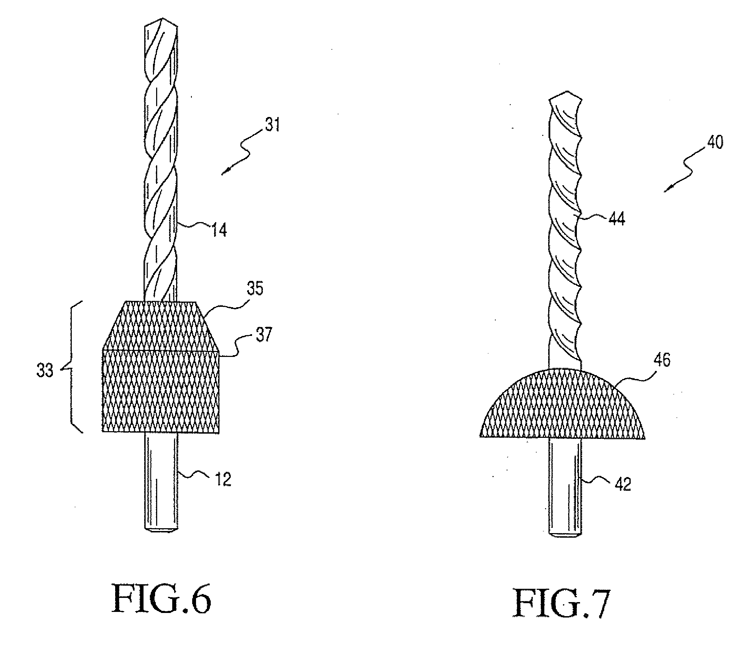

As shown in Figure 6, a rotary tool 31 includes a shank 12, a drill bit 14 and a file portion 33 having a frusto conical forward portion 35 and a cylindrical rear or base portion 37. The tool 31 as shown in Figure 6 has a unitary one-piece construction.

Another embodiment of the invention is illustrated in Figure 7 wherein a rotary tool 40 includes a shank 42 and drill bit 44. As illustrated, a file portion 46 of the rotary tool 40 forms a frusto hemisphere i.e. having a cross sectional shape of a semi-circle with a relatively flat small portion at the top where the drill bit 44 enters into the hemisphere in axial alignment with a shank 42. The rotary tool 40 may have a relatively short or relatively long drill bit as well as a relatively small or relatively large diameter. Nevertheless, for practical considerations, it is believed that the frusto spherical portion should have a diameter of about 2.5 cm to about 3.6 cm. As illustrated in Figure 7 the diameter of the file portion 46 i.e. the hemisphere is preferably about 2.5 cm while the diameter illustrated in Figure 6A is about 3.6 cm.

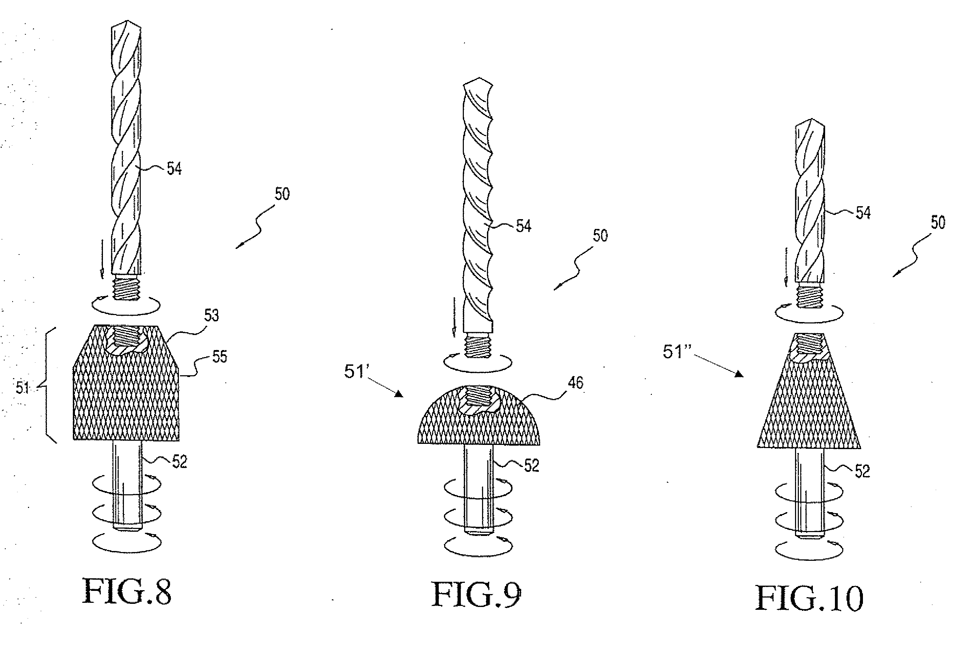

Further embodiments of the invention are shown more clearly in Figures 8, 9 and 10. As shown, each of the tools 50 includes a shank 52 and drill bit 54. However, as shown in Figure 8 the rotary tool includes a file portion 51 having a six-sided cross section, a frusto conical file portion 53 and a cylindrical file portion 55. An important element in each of the rotary tools shown in Figures 8, 9 and 10 is a removable drill bit which is screwed into the file portion with a left hand thread, so that the use with a drill tends to tighten the drill bit. As illustrated in Figure 8, 9 and 10, the length of the drill bit 54, may be relatively short as shown in Figure 10 or relatively long as shown in Figure 8.

Further, the diameters of the drill bits 54 may vary as illustrated in Figures 8 and 9. The thickness and length and type of drill may also be varied for various application such as for use with wood or steel which will be well understood by persons of ordinary skill in the art. In addition, it also contemplated that the rotary tools in accordance with the present invention may be provided in sets of drills with different size and shaped file portions and different size drill bits. Thus, the use of a two-piece structure allows the use of a particular size and shaped file portion with different drill bits for different applications. For example, different shaped file portions 51, 51' and 51" are illustrated in Figures 8, 9 and 10.

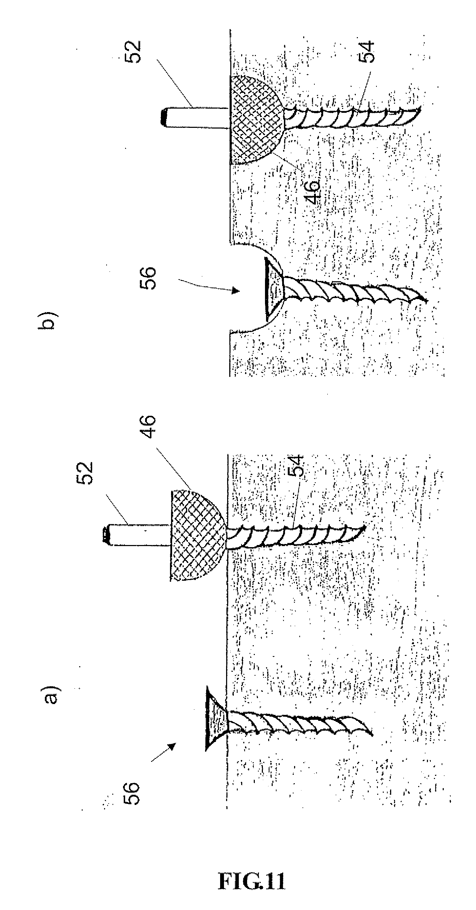

Figure 11a and b demonstrate that the rotary tool may also be used for inserting screws 56. In principle, the screw 56 can be inserted in two different ways. In the first way, the screw 56 is inserted directly onto the surface of the workpiece with the screw head protruding from the surface as demonstrated in Figure 11a. The rotary tool can be used for drilling a hole into which the screw 56 is to be inserted. In case the rotary tool has a one-piece unitary construction, the screw 56 can be inserted into the hole by using another rotary tool adapted to hold and turn the screw 56. For example, the screw 56 can be held by a magnetic unit and turned by a unit having protrusions that correspond to the recesses on the screw head. Other ways of holding and turning the screw 56 as known in the art are also conceivable. In case the drill bit 14 can be removed from the rotary tool, the same tool can be used for inserting the screw 56 after the hole has been drilled. The drill bit 14 has to be replaced by a unit capable of holding and turning the screw 56.

In the other way, the screw 56 can be inserted into a chamfering of a workpiece as shown in Figure 11b. The rotary tool can be used for drilling the hole into the workpiece as well as to generate the chamfering into which the screw 56 should be inserted. Drilling the hole and generating the chamfering can be done in the same operation using the rotary tool according to the present invention. Inserting the screw is done in the same manner as described above. Depending on the screws to be inserted into the workpiece, file portions of appropriate shapes can be used to generate a suitable chamfering.

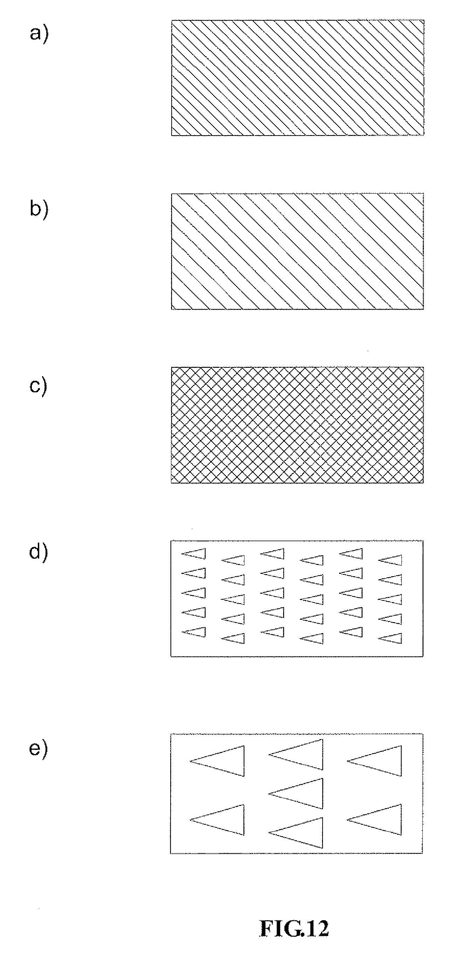

Figure 12a-e illustrates the coarseness of a file portion which will vary for different applications. Figure 12a and 12b demonstrate file portions in with the teeth are arranged in parallel lines. The number of lines decreases from 12a to 12b. In Figure 12c the teeth are arranged in crossing lines and in Figure 12d and 12e the teeth are formed as granular cutters. The coarseness varies with number and arrangement of the teeth. The properties of the workpiece to be processed can be considered by using file portions of different teeth arrangements. For example, the coarseness shown in Figure 12d might be suitable for relatively soft metals while that shown in Figure 12e might be appropriate for wood.

It should also be recognized that the coarseness of the file portion may also vary as shown in the following table.

**TABLE**

| Smoothness No. | Degree of smoothness | No. of teeth for each longitudinal cm |
|---|---|---|
| 0 | Coarse file | 10 - 4,5 |
| 1 | Semi coarse file | 16 - 5,3 |
| 2 | Semi coarse file (coarsening) | 25 - 10,0 |
| 3 | Smooth file | 35,5 - 14 |
| 4 | Very smooth file (velvet) | 50 - 25 |
| 5 | Thin smooth file (super touch) | 71 - 40 |

It is also contemplated that a drill bit may be replaced by a removable screw that may be left in the work piece. In this application, the screw may be threaded into the file portion XX or placed therein with a crosscut or slot with a Philips head or regular screw head which is magnetised so that the screw is held in place.

While the invention has been described in connection with its preferred embodiments, it should be recognized that changes and modifications may be made therein without departing from the scope of the appended claims.

## Claims

1. A one-piece rotary tool for performing a plurality of operations on a workpiece, said rotary tool comprising
a unitary hardened steel shank (12) adapted to fit into a chuck of an electric drill (22), a drill bit (14) and a frusto conical file (16) between said shank (12) and said drill bit (14) along a common longitudinal axis and wherein said frusto conical file (16) includes an outer periphery that defines an angle of between about 15° and 55°, preferably between 25° and 45°, 35° on average with respect to the longitudinal axis of said tool and wherein the composition of said steel includes from about 0.45% by weight to about 0.65% by weight carbon, about 2.25% by weight silicon, from 0.4% by weight to about 1.4% by weight molybdenum, from 1.5 to about 3.25% by weight chrome and less than 0.45% by weight sulphur and phosphorous.

2. A one-piece rotary tool according to claim 1,
in which the composition of said steel includes about 0.65 % by weight carbon, about 2.25% by weight silicon, about 1.4% by weight molybdenum and about 3.25% by weight chrome.

3. A one-piece rotary tool according to claim 1,
in which the composition of said steel includes about 0.45% by weight carbon, about 2.25% by weight silicon, about 0.4% by weight molybdenum and about 1.5% by weight chrome.

4. A one-piece rotary tool according to claim 1,
in which the composition of said steel includes about 0.55% by weight carbon, about 2.25% by weight silicon, about 0.9 % by weight molybdenum and about 2.4% by weight chrome.

5. A one-piece rotary tool according to one of the preceding claims,
in which said frusto conical file (16) includes a plurality of crowned teeth about its periphery and wherein each of said plurality of teeth have a front cutting side (30) and a back side (32) and in which each tooth includes a plurality of sharp serrations (38) extending longitudinal of each tooth and formed on the backside of each tooth adjacent the cutting edge (36) thereof.

6. A one-piece rotary tool according to one of the preceding claims,
in which the outer periphery of a frusto conical file (27) forms an angle with a longitudinal axis of said tool of about 55°.

7. A one-piece rotary tool according to one of the claims 1 to 5,
in which the outer periphery of said frusto conical file (16) forms an angle with the longitudinal axis of the tool of about 15°.

8. A one-piece rotary tool according to one of the claim 1 to 5,
said rotary tool comprising a hardened steel shank (12) adapted to fit into a chuck of an electric drill (22), and axially aligned drill bit (14) and a file portion (33) having a forward portion (35) adjacent to said drill bit (14) and rear portion (37) adjacent said shank (12) and wherein the diameter of said file portion (51) increases between said front and rear portions (35, 37) and wherein the composition of said steel includes from 0.45% by weight to about 0.65% by weight carbon, about 2.25% by weight silicon, from 0.4% by weight to about 1.4% by weight molybdenum, from 1.5 to about 3.25% by weight chrome and less than 0.45% by weight sulphur and phosphorous.

9. A one-piece rotary according to claim 8,
in which the file portion (33) has a shape of a hemisphere.

10. A one-piece rotary tool according to claim 8,
in which the file portion (33) has a frusto conical shape forming an angle of between 15° and 55°.

11. A one-piece rotary tool according to claim 8,
in which said drill bit (14) is removably attachable to said file portion (33).

12. A one-piece rotary tool according to claim 8,
in which said tool has a unitary construction.

13. A one-piece rotary tool according to one of the claims 1 to 12,
in which the steel includes up to about 1% by weight of nickel, tungsten and cobalt and wherein the steel has been annealed at between about 720°C and 735°C.

14. A two-piece rotary tool for performing a plurality of operations on a workpiece, said rotary tool comprising a hardened steel shank (52) adapted to fit into the chuck of an electric drill (22), a drill bit (54) and a file portion (51) between said shank (52) and said drill bit (54) along a common longitudinal axis and
wherein the composition of said steel tool includes 0.55% by weight carbon, 2.25% silicon, 0.9% by weight molybdenum, 2.4% by weight chrome and less than 0.45% by weight sulphur and phosphorous.

15. A two-piece rotary tool according to claim 14,
wherein said file portion (51) includes a frusto conical portion (53) and defines an angle of between about 45° and 65° with respect to the longitudinal axes of said tool.

16. A two-piece rotary tool according to claim 15,
wherein said frusto conical portion (53) includes a plurality of teeth about its periphery and where each of said plurality of teeth have a front cutting side (30) and a back side (32) and in which each tooth includes a plurality of sharp serrations (38) extending longitudinally of each tooth and formed on the back side (32) of each tooth adjacent to the cutting edge (36) thereof.

17. A two-piece rotary tool according to claim 15,
in which said file portion (51) includes a cylindrical portion (55) adjacent to said frusto conical portion (53).

18. A two-piece rotary tool according to claim 14,
wherein said file potion (51) has a frusto spherical shape.

19. A two-piece rotary tool according to one of the claims 14 to 18,
in which said drill bit (54) is removably attachable to said file portion (51).

20. A two-piece rotary tool according to one of the claims 14 to 19,
in which the steel includes up to about 1% by weight of nickel, tungsten and cobalt and wherein the steel has been annealed at between about 720°C and 735°C.

21. A rotary tool set for performing a plurality of operations on a work piece, said drill set including a plurality of rotary tools each of which includes a hardened steel shank (12) adapted to fit into the chuck of an electric drill (22), a drill bit (14) and a file portion (16, 33) between said shank (12) and said drill bit (14) along a common longitudinal axis and wherein said drill set includes file portions (33) having a plurality of different shapes.
